# FASCICULE DE BREVET EUROPEEN

(11) **EP 2 379 900 B1**
(45) Date de publication et mention de la délivrance du brevet: **17.04.2013**
(21) Numéro de dépôt: 10707316.5
(22) Date de dépôt: 19.01.2010
(51) Int. Cl.: F16L 3/127, F16L 55/035, F16L 3/202, F16C 11/10, F16M 11/14

(54) **DISPOSITIF D'ATTACHE POUR DES TUYAUX HYDRAULIQUES FLEXIBLES**
BEFESTIGUNGSVORRICHTUNG FÜR HYDRAULIKSCHLÄUCHE
FASTENING DEVICE FOR HYDRAULIC HOSES

(30) Priorité: 20.01.2009 FR 0900243
(43) Date de publication de la demande: 26.10.2011
(73) Titulaire: Airbus Operations (S.A.S.), 31060 Toulouse (FR)
(72) Inventeur: CAYSSIALS, Julien, F-31200 Toulouse (FR); ROSSI, Frédéric, F-32450 Lartigue (FR); MACHADO, Stéphane, F-31270 Villeneuve Tolosane (FR)
(74) Mandataire: Maupilier, Didier
(86) Numéro de dépôt international: PCT/FR2010/050074
(87) Numéro de publication internationale: WO 2010/084279

(56) Documents cités:
- DE-U1-202005 001 986
- FR-A1- 2 918 724
- GB-A- 592 755
- US-A- 1 904 296

## Description

La présente invention appartient au domaine des systèmes hydrauliques pour aéronef et plus particulièrement l'invention concerne un support adapté pour la fixation et le maintien de tuyauteries hydrauliques souples.

Dans les aéronefs de nombreux systèmes mobiles sont activés au moyen de servocommandes ou de vérins hydrauliques, par exemple des gouvernes de commande de vol, des dispositifs hypersustentateurs ou encore des trappes ou des trains d'atterrissage.

Sur de nombreux modèles d'aéronefs, les servocommandes et les vérins hydrauliques sont raccordés à un système de distribution hydraulique d'un fluide hydraulique sous pression dans lequel le fluide hydraulique circule entre des pompes de génération de la pression hydraulique et les utilisateurs de l'énergie hydraulique, les servocommandes et vérins, au moyen de tuyauteries dites HP, pour haute pression, pour apporter le fluide des pompes vers les utilisateurs et dites BP, pour basse pression, pour retourner le fluide des utilisateurs vers les pompes. Certaines de ces tuyauteries sont souples pour prendre en compte des déformations prévisibles de la tuyauterie en raison de mouvements de structure ou en raison de vibrations et les tuyauteries hydrauliques, tant HP que BP, sont fixées dans l'aéronef au moyen de colliers de maintien fixés à la structure de l'aéronef.

En dépit des conditions sévères, les colliers de maintien doivent garantir que les tuyauteries hydrauliques sont correctement maintenues et ne risques pas d'être endommagées en raison de leur importance pour la sécurité de l'aéronef.

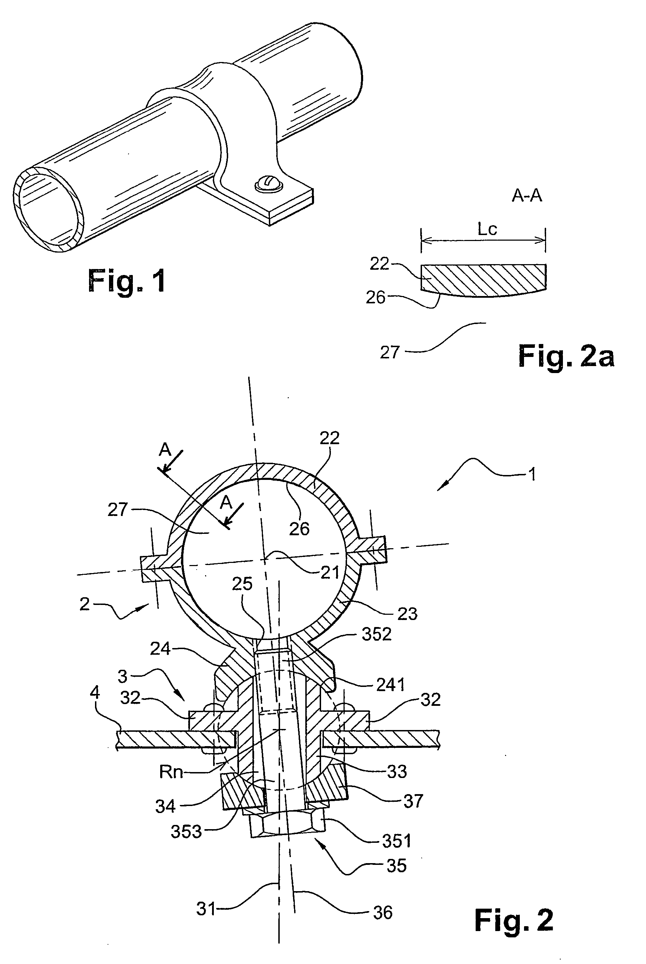

Il est ainsi connu dans les aéronefs de maintenir les tuyauteries de manière plus ou moins régulièrement espacée par des colliers de serrage, comme illustré sur la figure 1, fixés rigidement à la structure pour assurer un maintien ferme et précis de la tuyauterie et éviter en particulier que sous l'effet de vibrations la tuyauterie risque de subir une usure par frottement contre une structure ou un élément voisin.

Un inconvénient de ce type de colliers de serrage tient en partie au difficultés de garantir pour chaque collier un positionnement précis et adapté en emplacement et en orientation du fait des tolérances de positionnement des différents éléments de structure et des formes et dimensions des tuyauteries.

Dans le cas des tuyauteries rigides, par exemple en acier inoxydable ou en titane, un léger défaut d'alignement du collier, c'est à dire d'un écart angulaire entre l'axe du collier et l'axe de la tuyauterie, est sans effet notable en raison de la rigidité de la tuyauterie et de l'utilisation d'une protection en élastomère entre la tuyauterie et une partie métallique du collier.

Dans le cas des tuyauteries souples, par exemple les tuyauteries en élastomère recouvertes d'un tressage métallique le plus souvent en acier inoxydable, les conséquences d'un défaut d'alignement sont beaucoup plus critiques.

Dans ce cas les frottements entre la tuyauterie souple et le collier, sur le périmètre de l'ouverture du collier, conduisent à un rapide endommagement de la tuyauterie souple, de la protection métallique tressée dans un premier temps puis de la conduite en élastomère dans un second temps si la tuyauterie souple n'est pas remplacée.

Les tolérances de fabrication ne permettent cependant pas simplement de garantir qu'un collier de fixation aura l'orientation souhaitable lors du montage d'une tuyauterie souple dans la structure et des usures anormales sont observées en exploitation qui nécessitent le remplacement de tuyauteries souples bien avant leurs dates de remplacement programmé.

Par ailleurs, le document FR 2918724 A1 de l'art antérieur montre un collier de maintien (8, figure 2) qui dévoile le préambule de la revendication 1. Ce collier a pour inconvénient de ne pas pouvoir être bloqué temporairement dans une position quelconque et de ne permettre le bloquage que dans des positions prédéterminées (figure 1).

La présente invention à précisément pour objectif de résoudre ce défaut en proposant un collier apte à éviter les conséquences des défauts d'alignements sur les tuyauteries souples.

Pour cela, le collier de maintien pour tuyauterie hydraulique souple de l'invention.

Pour réaliser une rotule compacte pouvant aisément être bloquée de manière fiable ou débloquée, l'assemblage formant rotule est avantageusement principalement constitué par le fût de la tige de fixation formant la noix de la rotule et par l'anneau de serrage d'une part et une rondelle sphérique concave d'autre part formant la cage de la rotule.

L'anneau de serrage et la rondelle sphérique concave sont maintenues solidaires par une vis de serrage passant par un trou, de même axe que l'axe de la tige de fixation ou du fût, traversant le fût entre deux extrémités du fût.

De manière à réduire le nombre d'éléments nécessaires à la réalisation de la rotule, et selon l'invention la noix de la rotule est formée essentiellement du fût dont des surfaces aux extrémités correspondent à des calottes sphériques d'une sphère de rayon **Rn,** c'est à dire le rayon de la noix de rotule, centrée sur l'axe du trou.

Toujours afin de réduire le nombre de pièces formant la rotule, l'anneau de serrage comporte avantageusement une empreinte sphérique concave, sensiblement de rayon **Rn,** au niveau d'une embase de l'anneau de serrage, l'embase ayant pour effet d'élargir la surface utile de la cage côté anneau de serrage sans élément rapporté.

Pour assurer un blocage suffisant de la rotule sans serrage excessif de la vis de serrage, avantageusement tout ou partie des surfaces de contact entre la noix de rotule et la cage de rotule sont conformées, par exemple au moyen de stries ou par un état de surface suffisamment granuleux, pour limiter des risques de glissement entre la cage et la rotule lorsque la rotule est bloquée.

Afin de disposer de capacité de mouvement suffisant de la rotule, la vis de serrage, comporte avantageusement une tige de section sensiblement inférieure aux sections du trou de sorte à permettre à l'axe de la tige de pouvoir prendre des directions différentes de la direction de l'axe du fût.

Afin d'augmenter les capacités de débattement angulaire de la rotule sans nuire à la tenue mécanique du fût dans lequel les sections du trou ne peuvent pas être agrandies au-delà de certaines limites sans risque de diminuer la résistance du fût, avantageusement le trou comporte des sections évasées vers les extrémités du fût, par exemple sous la forme de chanfreins.

Pour fixer solidement le collier de maintien tout en laissant un accès à la tête de la vis, le fût comporte avantageusement des pattes de fixation apte à être solidarisées avec la structure support sur laquelle le collier de maintien est destiné à être fixé. Avantageusement, pour tenir compte des défauts d'alignement résiduels de la tuyauterie dans le collier de maintien ainsi qu'en raison des mouvements de la tuyauterie soumise à un environnement vibratoire sévère et éviter que la tuyauterie ne soit soumise à l'action d'un bord agressif de l'anneau de serrage, l'anneau de serrage détermine, par ses parois intérieures, un canal, d'axe l'axe d'anneau, présentant des sections réduites dans une partie centrale dudit canal et évasées vers chacune des extrémités dudit canal.

Le canal est avantageusement de forme paraboloïde de révolution à une nappe ou est une surface de révolution présentant un profil convexe, par exemple en arc de cercle.

La description d'un mode de réalisation de l'invention est faite en référence aux figures qui représentent :
- Figure 1 :: déjà citée, un exemple d'un collier de fixation suivant l'art antérieur ;
- Figure 2 :: une section d'un collier de l'invention suivant un plan de symétrie perpendiculaire à l'axe du collier ;
- figure 2a :: une section de la paroi de l'anneau de serrage du collier de la figure 2.

Un collier de maintien 1 pour tuyauterie hydraulique souple d'aéronef suivant l'invention comporte un anneau de serrage 2 et une tige de fixation 3.

Comme illustré sur la figure 2, l'anneau de serrage 2 est solidaire de la tige de fixation 3 de telle sorte que l'axe 21 du collier, c'est à dire sensiblement l'axe de la tuyauterie lorsqu'une tuyauterie est maintenue par le collier, est maintenue dans une direction sensiblement constante par rapport à un axe 31 de la tige de fixation. Pour simplifier les illustrations cette direction sensiblement constante de l'axe 21 du collier est représentée arbitrairement comme une direction sensiblement perpendiculaire à l'axe 31 de la tige de fixation sans que cela ne constitue une limitation de la présente description.

La tige de fixation comporte en outre des moyens, par exemple des pattes de fixation 32, adaptés pour immobiliser le collier 1 par rapport à un support 4 appartenant à la structure de l'aéronef.

La tige de fixation 3 comporte un fût 33 traversé suivant la direction de l'axe 31 de la tige de fixation par un trou 34, d'axe l'axe 31 de la tige de fixation, débouchant à deux extrémités du fût, une première extrémité du côté de l'anneau de serrage 2 et une seconde extrémité du côté opposé audit anneau de serrage.

La tige de fixation 3 comporte également une vis 35 traversant le trou 34 et dont la tige 353 de vis est d'une section sensiblement inférieure aux sections du trou 34 de sorte que la vis puisse être inclinée dans ledit trou par rapport à l'axe 31, comme illustré sur la figure 2, c'est à dire qu'un axe 36 de la vis 35 forme un angle avec l'axe 31 de la tige de fixation 3 et du trou 34.

A ses première et seconde extrémités les surfaces du fût 33 sont en forme de calottes sphériques convexes. Plus précisément les dites surfaces appartiennent à une sphère de rayon **Rn,** représentée en trait discontinu sur la figure 2, centrée sur l'axe 31 de la tige de fixation, de sorte à former une noix de rotule.

A une extrémité de la vis 35 située du côté de la seconde extrémité du trou 34, la vis 35 est pourvue d'une tête 351 et d'une rondelle 37 à empreinte sphérique concave, ladite empreinte concave étant placée du coté du fût 33 et prenant appui sur la surface sphérique de l'extrémité dudit fût avec laquelle elle est coordonnée en rayon.

La tête 351 est conformée de manière connue afin de permettre d'entraîner la vis en rotation autour de son axe 36 pour serrer ou desserrer ladite vis, par exemple une tête de forme hexagonale ou comportant une empreinte telle qu'une empreinte cruciforme.

A une extrémité de la vis 35 située du côté de la première extrémité du trou, la vis est munie d'un filetage conventionnel 352.

L'anneau de serrage 2 est solidarisé avec la tige de fixation 3 par la vis 35.

Le filetage 352 de la vis 35 coopère avec un trou fileté 25 de l'anneau de fixation, de préférence en association avec des moyens de freinage de la vis pour éviter un desserrage sous l'effet des vibrations.

Lorsque l'anneau de serrage 2 est fixé à la tige de fixation 3, ledit anneau de serrage est en contact avec le fût 33 du côté de la première extrémité dudit fût sur une surface d'appui sphérique concave 241, ménagée dans une embase 24 de l'anneau de fixation, coordonnée en rayon avec la surface de la première extrémité dudit fût.

Ainsi l'anneau de serrage 2, plus précisément l'embase 24 dudit anneau de serrage, et la rondelle 37 forme la partie utile d'une cage sphérique de rotule dans laquelle est maintenue la noix formée par le fût 33, les deux parties de la cage étant maintenues solidaires par la vis 35.

Lorsque la vis est serrée, la pression exercée par l'embase 24 et par la rondelle 36 sur les extrémités du fût 33 assure une immobilisation de l'anneau de serrage 2 par rapport à la tige de fixation 3.

Lorsque la vis 35 est suffisamment desserrée, l'anneau de serrage 2 peut être déplacé sans effort significatif en rotation autour de l'axe 36 de la vis 35 et en inclinaison dans toutes les directions dans les limites des débattements angulaires autorisés par le choix des diamètres du trou 34 dans le fût 33 et de la vis 35 traversant ledit trou.

Les surfaces en contact du fût 33 avec l'embase 24 d'une part et la rondelle 36 d'autre part sont rugueuses ou striées pour limiter les risques de glissement lorsque la vis est serrée, sans exiger un effort de serrage trop important.

Le trou 34 du fût 33 est éventuellement élargi sur une partie de sa longueur, solution non représentée, pour augmenter les capacités de débattement angulaire de la tige de la vis 35 dans ledit trou et ou pour limiter une déformation par matage des bords du trou 34 lorsque la tige 353 de la vis vient en butée sur lesdits bords.

Par exemple une forme conique tel que des chanfreins sur les bords du trou 34 permettent d'obtenir un tel résultat sans diminuer significativement la résistance mécanique du fût 33 dont des épaisseurs de parois dans des zones d'encastrement du fût, en particulier au niveau des pattes de fixation 32, ne sont pas modifiées par lesdits chanfreins.

L'anneau de serrage 2, dont le diamètre intérieur est naturellement adapté au diamètre extérieur d'une tuyauterie à maintenir en tenant compte du serrage recherché sur ladite tuyauterie, présente une largeur de collier **Lc** correspondant à une longueur de tuyauterie comprise dans ledit collier de serrage.

Cette longueur **Lc** n'est pas imposée mais en pratique elle est suffisante pour répartir les efforts de maintien sur une surface de tuyauterie suffisante afin d'éviter des endommagements de la tuyauterie par des pressions locales trop élevées. **Lc** est par exemple compris entre un quart et un diamètre de la tuyauterie.

L'anneau 2 détermine ainsi un canal 27 de longueur **Lc** et d'axe l'axe 21 dudit anneau dans lequel est insérée la tuyauterie à maintenir.

Le canal 27 de l'anneau de serrage 2 n'est toutefois pas, dans un mode préféré de réalisation du support 1, cylindrique comme sur les colliers conventionnels mais au contraire présente une section minimale, de préférence sensiblement dans un plan de symétrie de l'anneau perpendiculaire à l'axe 21 de l'anneau, et s'évase de chaque côté de la section minimale vers des extrémités ouvertes du canal, comme illustré sur le détail de la figure 2a.

La surface interne 26 du canal correspond par exemple à la surface d'un paraboloïde de révolution à une nappe dont la section droite la plus petite correspond, au serrage recherché près, à la section de la tuyauterie devant être maintenue.

Dans la mesure où la tuyauterie devant être maintenue est une tuyauterie présentant une certaine capacité à être écrasée, légèrement, sans endommagement, et ou du fait de l'utilisation d'un élément en élastomère, non représenté, au niveau de la paroi interne 26 du canal de l'anneau de serrage, la surface interne du canal peut également être de forme plus simple comme une forme de révolution présentant un profil convexe en arc de cercle.

Dans le choix de la section minimale du canal 27, il est préféré de prévoir un serrage suffisant de la tuyauterie souple de sorte que la tuyauterie soit maintenue par le collier de serrage sur une surface suffisante pour éviter une usure de la tuyauterie sous l'effet des vibrations. En effet le serrage sur une ligne ou une surface faible conduirait à des efforts localement élevés lors des vibrations et à une détérioration rapide des parois extérieures de la tuyauterie et ou du collier de serrage.

Par la forme évasée du canal 27, en présence de vibrations ou de déformations de la tuyauterie, la tuyauterie conserve la possibilité de prendre des directions légèrement différentes d'une orientation initiale lors du serrage du collier de fixation sans se trouver en appui sur une arrête aux extrémités du canal et tout en restant en appui dans l'anneau de serrage.

De manière connue l'anneau de serrage 2 est réalisé en au moins deux parties assemblées afin d'être ouvert pour placer la tuyauterie à maintenir et refermé pour maintenir la tuyauterie dans le collier.

Dans l'exemple de réalisation de la figure 2, l'anneau de serrage 2 comporte un premier demi-anneau 23 comportant l'embase 24 fixée à la tige de fixation 3 et un second demi-anneau 22 maintenu au premier demi-anneau au moyen de fixations telles que des vis, non représentées.

Il est possible de mettre en oeuvre l'invention en s'écartant des détails de réalisation décrits, par exemple sur les moyens pour fixer la tige de fixation 3 sur une structure de l'aéronef qui sont susceptibles de prendre de nombreuses formes ou sur des détails de réalisation de l'anneau de serrage 2 dont de nombreuses formes connues sont applicables à un collier de maintien suivant l'invention.

Les différents éléments du collier de maintien sont réalisés dans toutes matières offrant les qualités mécaniques suffisantes pour résister aux contraintes de l'utilisation prévue ainsi que la résistance aux conditions environnementales thermiques et chimiques en particulier.

Avantageusement des éléments sont réalisés dans un acier inoxydable ou un alliage de titane.

Si la tenue mécanique le permet, des éléments sont réalisés dans un alliage d'aluminium ou dans des matériaux plastiques.

Lorsque qu'un tel collier de maintien est mis en oeuvre, le collier de maintien 1 est fixé par la tige de fixation 3 à l'emplacement voulu d'une structure d'aéronef 4 par des moyens de fixation conventionnels, vis ou rivets par exemple, au moyen des pattes de fixation 32.

En raison de la forme du collier de maintien, l'emplacement de la structure sur laquelle est fixé le collier de maintien est adapté si besoin afin que la tête de vis 351 reste accessible pour le serrage et le desserrage de ladite vis.

La vis est alors desserrée pour rendre possible les mouvements de l'anneau de serrage.

L'anneau de serrage 2 est ouvert, la tuyauterie est mise en place et l'anneau de serrage est refermé en même temps que l'anneau est orienté du fait des capacité de la rotule afin que la tuyauterie souple adopte une position aussi naturelle que possible avec des défauts d'alignement entre la position naturelle de la tuyauterie et l'orientation imposée par le collier de fixation 1 les plus réduits possibles.

Lorsqu'une position jugée satisfaisante est obtenue, la vis 35 est serrée afin de bloquer le collier 1, c'est à dire de bloquer l'orientation de l'anneau de serrage 2 par rapport au fût 33 de la tige de fixation 3.

La forme intérieure de l'anneau de serrage 2, évasée vers les deux ouvertures dudit anneau, permet de compenser sans contrainte les écarts d'alignement résiduels d'une part et de diminuer le risque d'endommagement de la tuyauterie au niveau de l'anneau de serrage sous l'effet des vibrations auxquelles est soumise la tuyauterie en exploitation.

Le support de tuyauterie de l'invention permet donc d'assurer un maintien efficace des tuyauteries souples hydrauliques en diminuant sensiblement le risque d'endommagement des dites tuyauteries dans l'environnement sévère de fonctionnement de ces tuyauteries à bord d'un aéronef.

## Revendications

1. Collier de maintien (1) pour tuyauterie hydraulique souple comportant un anneau de serrage (2), déterminant un canal de passage (27) pour la tuyauterie hydraulique souple et déterminant un axe d'anneau (21), solidaire d'une tige de fixation (3) d'axe de tige (31) comportant des moyens d'immobilisation (32) de la tige de fixation (3) par rapport à une structure support (4) sur laquelle le collier de maintien est destiné à être fixé les moyens d'immobilisation (32) de la tige de fixation (3) étant solidaires d'un fût (33) de ladite tige de fixation, ledit fût (33) de fixation et !'anneau de serrage (2) étant solidarises par un assemblage formant rotule, lédit collier étant **caractérisé en ce que** des surface des extrémités du fût (33) correspondent à des calottes sphériques d'une sphère de rayon **Rn** formant une noix de rotule, centrée sur l'axe (31) de la tige de fixation, et **en ce que** ladite rotule est bloquable dans une position quelconque, parmi les positions pouvant être adoptée par ledit anneau de serrage (2) par rapport audit fût (33) de fixation lorsque ladite rotule n'est pas bloquée, temporairement lors d'une étape de montage de la tuyauterie, par une vis de serrage (35) traversant ladite rotule.

2. Collier de maintien suivant la revendication 1 dans lequel l'assemblage formant rotule est principalement constitué par le fût (33) de la tige de fixation formant une noix de rotule et par l'anneau de serrage d'une part et une rondelle sphérique concave d'autre part formant une cage de rotule, l'anneau de serrage et la rondelle sphérique concave étant maintenues solidaires par la vis de serrage (35) passant par un trou (34), d'axe l'axe (31) de la tige de fixation, traversant le fût (33) entre deux extrémités dudit fût.

3. Collier de maintien suivant la revendication 2 dans lequel l'anneau de serrage (2) comporte une empreinte sphérique concave (241), sensiblement de rayon **Rn,** au niveau d'une embase (24) dudit anneau de serrage.

4. Collier de maintien suivant l'une des revendications 2, ou 3 dans lequel des surfaces de contact entre la noix de rotule et la cage de rotule sont conformées pour limiter des risques de glissement entre ladite cage et ladite rotule lorsque la rotule est bloquée.

5. Collier de maintien suivant l'une des revendications 2 à 4 dans lequel la vis de serrage (35) comporte une tige (353), d'axe (36), de section sensiblement inférieure aux sections du trou (34) de sorte à permettre à l'axe (36) de ladite tige de pouvoir prendre des directions différentes de la direction de l'axe (31) du fût (33).

6. Collier de maintien suivant la revendication 5 dans lequel le trou (34) comporte des sections évasées vers les extrémités du fût (33).

7. Collier de maintien suivant l'une des revendications 2 à 6 dans lequel le fût (33) comporte des pattes de fixation (32) apte à être solidarisées avec la structure support (4) sur laquelle le collier de maintien est destiné à être fixé.

8. Collier de maintien suivant l'une des revendications précédentes dans lequel l'anneau de serrage (2) détermine un canal (27), d'axe l'axe d'anneau (21), déterminé par des parois intérieures (26) dudit anneau de serrage présentant une section réduite dans une partie centrale dudit canal et évasée vers chacune des extrémités dudit canal

9. Collier de maintien suivant la revendication 8 dans lequel le canal (27) est de forme paraboloïde de révolution à une nappe.

10. Collier de maintien suivant la revendication 8 dans lequel le canal (27) est une surface de révolution présentant un profil convexe en arc de cercle.

## Claims

1. Retaining collar (1) for flexible hydraulic hose comprising a clamping ring (2), determining a passageway channel (27) for the flexible hydraulic hose and determining a ring axis (21) secured to a fastening stem (3) with a stem axis (31) comprising means (32) for immobilizing the fastening stem (3) relative to a supporting structure (4) to which the retaining collar is designed to be fastened, the means (32) for immobilizing the fastening stem (3) being secured to a barrel (33) of the said fastening stem, the said fastening barrel (33) and the clamping ring (2) being secured by an assembly forming a swivel joint, the said collar being **characterized in that** surfaces of the ends of the barrel (33) correspond to spherical domes of a sphere having a radius **Rn** forming a swivel-joint ball, centred on the axis (31) of the fastening stem and **in that** the said swivel joint is able to be locked in any position, amongst the positions that can be adopted by the said clamping ring (2) relative to the said fastening barrel (33) when the said swivel joint is not locked, temporarily during a step of installing the hose, by a clamping screw (35) passing through the said swivel joint.

2. Retaining collar according to Claim 1, in which the assembly forming the swivel joint consists mainly of the barrel (33) of the fastening stem forming a swivel-joint ball and of the clamping ring on the one hand and a concave spherical shim on the other hand forming a swivel-joint cage, the clamping ring and the concave spherical shim being kept secured by the clamping screw (35) passing through a hole (34) of which the axis (31) is the axis of the fastening stem, passing through the barrel (33) between two ends of the said barrel.

3. Retaining collar according to Claim 2, in which the clamping ring (2) comprises a concave spherical recess (241), substantially with a radius **Rn,** level with a base (24) of the said clamping ring.

4. Retaining collar according to one of Claims 2 and 3, in which contact surfaces between the swivel-joint ball and the swivel-joint cage are formed to limit risks of slippage between the said cage and the said swivel joint when the swivel joint is locked.

5. Retaining collar according to one of Claims 2 to 4, in which the clamping screw (35) comprises a stem (353), with an axis (36) having a section substantially smaller than the sections of the hole (34) so as to allow the axis (36) of the said stem to be able to adopt directions different from the direction of the axis (31) of the barrel (33).

6. Retaining collar according to Claim 5, in which the hole (34) comprises sections flared towards the ends of the barrel (33).

7. Retaining collar according to one of Claims 2 to 6, in which the barrel (33) comprises fastening feet (32) capable of being secured to the supporting structure (4) to which the retaining collar is designed to be fastened.

8. Retaining collar according to one of the preceding claims, in which the clamping ring (2) determines a channel (27), of which the axis is the axis of the ring (21), determined by internal walls (26) of the said clamping ring having a reduced section in a central portion of the said channel and flared towards each of the ends of the said channel.

9. Retaining collar according to Claim 8, in which the channel (27) has a shape that is paraboloid of revolution with infinite curved surface.

10. Retaining collar according to Claim 8, in which the channel (27) is a surface of revolution having a circularly arcuate convex profile.

## Patentansprüche

1. Halteschelle (1) für Hydraulikschlauch, die einen Spannring (2) aufweist, der einen Durchgangskanal (27) für den Hydraulikschlauch festlegt und eine Ringachse (21) festlegt, die fest mit einem Befestigungsstift (3) achsgleich mit dem Stift (31) verbunden ist, die Feststellmittel (32) des Befestigungsstifts (3) in Bezug zu einer Tragstruktur (4) aufweist, auf der die Halteschelle zu befestigen ist, wobei die Feststellmittel (32) des Befestigungsstifts (3) fest mit einem Schaft (33) des Befestigungsstifts verbunden sind, wobei der Befestigungsschaft (33) und der Spannring (2) fest durch eine Montage verbunden sind, die ein Gelenk bildet, wobei die Schelle **dadurch gekennzeichnet ist, dass** Endoberflächen des Schafts (33) kugelförmigen Kalotten einer Kugel mit dem Radius **Rn,** die eine Gelenknuss bildet, die auf der Achse (31) des Befestigungsstifts zentriert ist, entsprechen, und dadurch, dass das Gelenk in einer beliebigen Position unter den Positionen, die von dem Spannring (2) in Bezug zu dem Befestigungsschaft (33) eingenommen werden können, wenn das Gelenk nicht blockiert ist, vorübergehend während eines Montageschritts des Schlauchs durch eine Spannschraube (35), die das Gelenk durchquert, blockiert werden kann.

2. Halteschelle nach Anspruch 1, bei der die Anordnung, die das Gelenk bildet, im Wesentlichen aus dem Schaft (33) des Befestigungsstifts, der eine Gelenknuss bildet, und aus dem Spannring einerseits und andererseits einer konkaven kugelförmigen Beilage, die einen Gelenkkäfig bildet, besteht, wobei der Spannring und die konkave kugelförmige Beilage fest durch die Spannschraube (35) zusammengehalten werden, die durch eine Bohrung (34) durchgeht, die mit der Achse (31) des Befestigungsstifts, der den Schaft (33) zwischen den zwei Enden des Schafts durchquert, achsgleich ist.

3. Halteschelle nach Anspruch 2, bei der der Spannring (2) einen konkaven kugelförmigen Abdruck (241) im Wesentlichen mit dem Radius **Rn** auf dem Niveau eines Sockels (24) des Spannrings aufweist.

4. Halteschelle nach einem der Ansprüche 2 oder 3, bei der Berührungsoberflächen zwischen der Gelenknuss und dem Gelenkkäfig ausgebildet sind, um Rutschgefahren zwischen dem Käfig und dem Gelenk einzuschränken, wenn das Gelenk blockiert ist.

5. Halteschelle nach einem der Ansprüche 2 bis 4, bei der die Spannschraube (35) einen Stift (353) mit Achse (36) mit einem Querschnitt aufweist, der im Wesentlichen kleiner ist als die Querschnitte der Bohrung (34), so dass es der Achse (36) des Stifts erlaubt wird, unterschiedliche Richtungen von der Richtung der Achse (31) des Schafts (33) einzunehmen.

6. Halteschelle nach Anspruch 5, bei der die Bohrung (34) Abschnitte aufweist, die zu den Enden des Schafts (33) hin aufgeweitet sind.

7. Halteschelle nach einem der Ansprüche 2 bis 6, bei der der Schaft (33) Befestigungspratzen (32) aufweist, die geeignet sind, um mit der Tragstruktur (4), an der die Halteschelle befestigt werden soll, fest verbunden zu werden.

8. Halteschelle nach einem der vorhergehenden Ansprüche, bei der der Spannring (2) einen Kanal (27) achsgleich mit der Ringachse (21) bestimmt, der von Innenwänden (26) des Spannrings bestimmt wird, die einen verringerten Querschnitt in einem zentralen Teil des Kanals aufweisen und der zu jedem der Enden des Kanals aufgeweitet ist.

9. Halteschelle nach Anspruch 8, bei der der Kanal (27) eine Scheibenparaboloidform aufweist.

10. Halteschelle nach Anspruch 8, bei der der Kanal (27) eine Umdrehungsfläche ist, die ein konvexes Kreisbogenprofil aufweist.
